# EUROPÄISCHE PATENTSCHRIFT

(11) **EP 0 473 119 B1**
(45) Veröffentlichungstag und Bekanntmachung des Hinweises auf die Patenterteilung: **01.06.1994**
(21) Anmeldenummer: 91114372.5
(22) Anmeldetag: 27.08.1991
(51) Int. Cl.: F16K 1/00, F16K 1/32

(54) **Hubventil**
Lift valve
Soupape d'élévation

(30) Priorität: 30.08.1990 DE 4027459
(43) Veröffentlichungstag der Anmeldung: 04.03.1992
(73) Patentinhaber: ARI-ARMATUREN ALBERT RICHTER GmbH & Co.KG., D-33758 Schloss Holte-Stukenbrock (DE)
(72) Erfinder: Murke, Dieter, W-4936 Augustdorf (DE)
(74) Vertreter: Loesenbeck, Karl-Otto, Dipl.-Ing.

(56) Entgegenhaltungen:
- AT-B- 266 532
- DE-A- 1 928 245
- DE-C- 497 761
- GB-A- 995 829
- US-A- 1 541 757
- US-A- 2 868 596
- US-A- 3 339 577

## Beschreibung

Die vorliegende Erfindung betrifft ein Hubventil mit einem einen unbearbeiteten Ventilsitz aufweisenden Gehäuse und einer heb- und senkbaren Spindel, die an ihrem unteren Ende das mit dem Ventilsitz zusammenwirkende Ventilstück trägt und mit einer im oberen Bereich des Gehäuses angeordneten Spindelmutter in Eingriff steht, wobei der obere Gehäusebereich gegenüber der vom Medium durchströmten Zone durch eine in dem Gehäuse angeordnete, auf die Spindel wirkende Dichtung abgedichtet ist.

Derartige Hubventile sind ihrem grundsätzlichen Aufbau nach geläufig und beispielsweise aus dem DE-GM 90 09 262 bekannt. Daß man den Ventilsitz unbearbeitet läßt, hat bezüglich einer einfachen Herstellung des den Sitz definierenden Ventilgehäuses Vorteile, bringt aber andererseits Probleme bei der Lagerung der Spindel mit sich. Fertigungstechnische Ungenauigkeiten im Ventilsitzbereich führen dazu, daß die Spindelbohrung vielfach nicht exakt fluchtend zum Sitz liegt. Zwar sucht sich das üblicherweise als Dichtkegel ausgebildete Ventilstück bei Aufbringung einer entsprechenden Schließkraft seine passende Lage am Ventilsitz, so daß das Ventil dicht schließt, doch gerät dadurch die Spindel, insbesondere bei schräg angeordneten Ventilsitzen, unter Umständen unter eine beträchtliche Biegespannung, die Probleme bezüglich eines Verklemmens,eines erhöhten Verschleißes und bezüglich einer Undichtigkeit im Bereich der Dichtung mit sich bringt, die den vom Medium durchströmten Bereich des Ventiles gegen den oberen Gehäusebereich und die Spindel abzudichten hat.

Aus der US-A- 2 868 596 ist ein Ventil bekannt, in welchem die Spindel in dem aufnehmenden Gehäusedurchgang so ausgebildet und geführt ist, daß eine beschränkte Kippbewegung der Spindel ermöglicht wird. Somit kann erreicht werden, daß ein ausreichendes Anliegen des Verschlußstückes an den Ventilsitz auch bei größeren Herstellungstoleranzen gewährleistet wird. Dieser Stand der Technik betrifft aber hauptsächlich Ventile mit ausschließlich drehbaren Spindeln, in welchen kaum Biegekräfte an der Spindel auftreten und die keine Spindelmutter für die Bewegungsübersetzung benötigen.

Der vorliegenden Erfindung liegt von daher die Aufgabe zugrunde, ein Hubventil der gattungsgemäßen Art zu schaffen, bei dem die genannten fertigungstechnisch möglichen Ungenauigkeiten ausgeglichen werden können, ohne daß die Spindel in ihrer Schließstellung derartigen zusätzlichen Biegekräften ausgesetzt ist.

Die erfindungsgemäße Lösung ergibt sich aus dem kennzeichnenden Teil des Patentanspruches 1. Die kippbewegliche Abstützung der Spindel am Gehäuse gewährleistet dabei, daß sich auch bei Maßabweichungen im Bereich Spindelbohrung-Ventilsitz das Ventilstück zuverlässig seine passende Lage auf dem Sitz sucht und dabei trotzdem die Spindel ausschließlich durch die Schließkraft und demzufolge ausschließlich axial belastet ist. Biegekräfte können nicht auftreten, da sich die Spindel im Bedarfsfall automatisch beim Schließvorgang in eine kleine Kipplage schräg stellt. Dies führt insgesamt zu einem verklemmungsfreien, verschleißarmen Arbeitendes Ventiles mit verringerter Belastung aller Führungen und Dichtungen und drückt sich auch in relativ geringen Betätigungskräften aus.

Durch die kippbewegliche Abstützung der Spindel in der Nähe der Dichtung wird erreicht, daß die von der Dichtung mitzumachende, bei einer etwaigen Verkippung der Spindel auftretende Bewegung schon von Haus aus sehr gering ist. Bei Wahl einer Dichtung mit einer elastisch kippbeweglichen Dichtlippe ist gewährleistet, daß in diesem Bereich auch bei einer Kippstellung der Spindel in ihrer Schließlage keinerlei Undichtigkeiten auftreten können. Die Spindelmutter, mit der die Spindel in Eingriff steht, ist im oberen Gehäusebereich mit soviel seitlichem Spiel gehalten, daß sie eine etwaige kleine Kippbewegung der Spindel mitmachen kann.

Gemäß einer bevorzugten Ausführungsform ist die Spindelmutter in axialer Richtung unter Federkraft gesetzt. Diese bewirkt in der Offenstellung des Ventiles eine Fixierung der Spindelmutter und des mit ihr verbundenen Handrades.

Hubventile der in Frage stehenden Art haben üblicherweise eine Feststellschraube zum zeitweiligen Festsetzen der Spindelmutter und des mit ihr verbundenen Handrades. Die Feststellschraube wird dabei von der Seite her durch den oberen Bereich des Gehäuses gegen die Spindelmutter geschraubt (DE-GM 89 03 056). In einer weiteren Ausgestaltung der vorliegenden Erfindung ist nunmehr die Feststellschraube durch die Nabe des Handrades gegen die Stirnfläche des oberen Bereiches des Gehäuses schraubbar. Auf diese Weise wird vermieden, daß die Feststellschraube in irgendeiner Form die Kippmöglichkeit oder eine eingenommene Kippstellung der Spindel und damit der Spindelmutter störend beeinflussen kann.

Weitere bevorzugte Ausgestaltungen ergeben sich aus den Unteransprüchen.

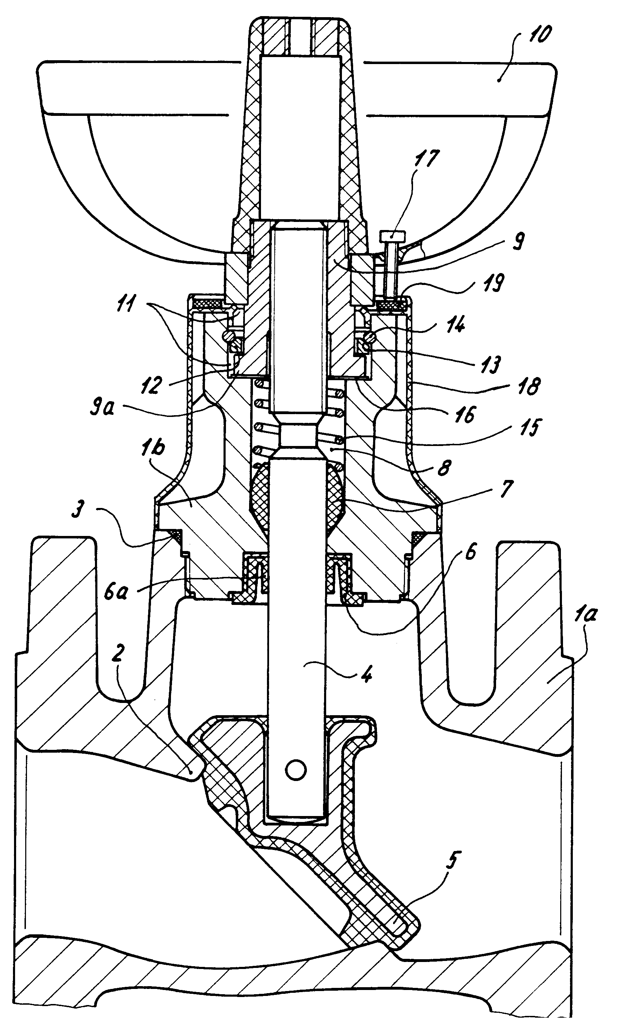

Ein Ausführungsbeispiel eines Hubventiles gemäß der Erfindung wird nachstehend unter Bezugnahme auf die Zeichnung näher beschrieben.

Die Zeichnung zeigt ein Hubventil gemäß der Erfindung in Schnittdarstellung.

Das in der Zeichnung dargestellte Hubventil hat ein zweiteiliges Gehäuse mit einem unteren Teil 1a, das die Anschlußstutzen sowie einen schräg angeordneten, unbearbeiteten Ventilsitz 2 aufweißt. In den unteren Teil 1a des Gehäuses ist ein oberer Teil 1b unter Zwischenlage einer Dichtung 3 geschraubt.

Das Hubventil besitzt ferner eine heb- und senkbare Spindel 4, die an ihrem unteren Ende ein als Dichtkegel ausgebildetes Ventilstück 5 trägt, das mit dem Ventilsitz 2 in der Schließstellung des Hubventiles zusammenwirkt. In der unteren Stirnfläche des oberen Teiles 1b des Gehäuses ist eine die Stellmechanik im oberen Gehäuseteil 1b gegenüber der vom Medium durchströmten Zone des Ventiles abdichtende Dichtung 6 angeordnet, die auf die Spindel 4 wirkt, welche diese Dichtung 6 durchtritt.

Da infolge von Fertigungstoleranzen die Spindelbohrung und die Sitzachse nicht immer genau fluchten, muß sich vielfach das Ventilstück 5 in der Schließphase mit einer kleinen seitlichen Verlagerungsbewegung einen dichten Sitz auf dem Ventilsitz 2 suchen. Um zu verhindern, daß hierdurch die Spindel 4 mit Biegekräften beaufschlagt wird, ist ihr erfindungsgemäß die Möglichkeit zu einer kleinen Kippbewegung gegeben, um der entsprechenden Bewegung des Ventilstückes 5 folgen zu können, mit dem Ergebnis, daß hierdurch in der Schließstellung die Spindel 4 ausschließlich mit den in Achsrichtung wirkenden Schließkräften beaufschlagt ist. Im dargestellten Ausführungsbeispiel ist hierzu die Spindel 4 in einer Kugelbuchse 7 verschieblich geführt und gehalten, die sich mit ihrer kugeligen Außenfläche, von daher dreh- und kippbeweglich, in einer Bohrung 8 im oberen Teil 1b des Gehäuses abstützt. Die kippbewegliche Abstützung der Spindel 4 in der Kugelbuchse 7 geschieht dabei in räumlicher Nähe zu der Dichtung 6, so daß gegebenenfalls der Verlagerungsweg, den die Dichtung 6 unter voller Beibehaltung ihrer Dichtigkeit mitmachen muß, von Haus aus sehr gering ist. Im dargestellten Ausführungsbeispiel ist in diesem Zusammenhang die Dichtlippe 6 als Doppellippendichtung ausgebildet, die eine elastisch kippbewegliche Dichtlippe 6a aufweist, die an der Spindel 4 anliegt und die in der Praxis kleine Verlagerungsbewegungen in diesem Bereich der Spindel 4 problemlos mitmachen kann, ohne die Dichtfunktion zu verlieren.

Die Spindel 4 steht mit ihrem oberen Gewindeabschnitt mit dem Gewinde einer Spindelmutter 9 in Eingriff, die ihrerseits mit einem Handrad 10 verbunden ist und über dieses drehbar ist und die ferner im oberen Teil 1b des Gehäuses drehbar aber unverschieblich gehalten ist.

Die Spindelmutter 9 ist dabei mit seitlichem Spiel 11 im oberen Teil 1b des Gehäuses angeordnet, damit sie etwaige Kippbewegungen der Spindel mitmachen kann, ohne diese Kippbewegungen zu beeinträchtigen.

Auch die Abstützzone der Spindelmutter 9 am oberen Teil 1b des Gehäuses zur Übertragung und Aufnahme der Schließkräfte in der Schließstellung des Ventiles ist flächenmäßig so gestaltet, daß diese Schließkräfte einwandfrei auch bei einer gewissen Schräglage der Spindel 4 und damit der Spindelmutter 9 aufgenommen werden können. Hierzu ist auf der oberen Rückseite einer unteren Schulter 9a der Spindelmutter ein Abstützring 12 angeordnet, der auch seinerseits noch ein kleines Spiel zu der angrenzenden Wand des oberen Teiles 1b des Gehäuses hat und der ferner oben außen eine Abstützschräge 13 hat, die sich ihrerseits an einem im oberen Teil 1b des Gehäuses festgesetzten Sprengring 14 abstützt. Die Flächengröße der Schräge 13 ist dabei so bemessen, daß es auch in Kipplagen der Spindelmutter 9 immer noch zu einer vollen, die Übertragung der Schließkraft gewährleistenden Abstützung der Spindelmutter 9 über den Abstützring 12 mit seiner Schräge 13 und den Sprengring 14 am oberen Teil 1b des Gehäuses kommt.

In weiterer zweckmäßiger Ausgestaltung ist die Spindelmutter in Axialrichtung unter die Kraft einer Feder 15 gesetzt, die die Spindelmutter fixiert. Die Feder 15 kann sich unterseitig an der Kugelbuchse 7 abstützen. Oberseitig wirkt sie auf die untere Stirnfläche der Spindelmutter 9. Da zweckmäßigerweise verhindert wird, daß sich bei der Ventilbetätigung die Feder 15 mitdreht, wird zwischen dem oberen Ende der Feder 15 und der unteren Stirnfläche der Spindelmutter 9 eine Rutschscheibe 16 angeordnet.

Für die gewünschte zeitweilige Feststellung der Spindelmutter 9 samt Handrad 10 ist eine Feststellschraube 17 vorgesehen, die erfindungsgemäß nunmehr durch eine Materialzone des Handrades 10 gegen die obere Stirnfläche des oberen Teiles 1b des Gehäuses schraubbar ist. Auf diese Weise können Kippmöglichkeit und Kipplage von Spindelmutter und Spindel in keiner Weise beeinträchtigt werden. Im dargestellten Ausführungsbeispiel ist der obere Teil 1b des Gehäuses von einer Abdeckkappe 18 umgeben, die drehfest auf dem oberen Teil 1b des Gehäuses angeordnet ist. An der Abdeckkappe 18 ist oberseitig an ihrer oberen Stirnfläche eine Verschleißscheibe 19 befestigt, gegen die die Feststellschraube 17 schraubbar ist.

## Patentansprüche

1. Hubventil mit einem einen unbearbeiteten Ventilsitz (2) aufweisenden Gehäuse (1a, 1b) und einer heb- und senkbaren Spindel (4), die an ihrem unteren Ende das mit dem Ventilsitz zusammenwirkende Ventilstück (5) trägt und mit einer im oberen Bereich des Gehäuses angeordneten Spindelmutter (9) in Eingriff steht, wobei der obere Gehäusebereich (1b) gegenüber der vom Medium durchströmten Zone durch eine in dem Gehäuse angeordnete, auf die Spindel (4) wirkende Dichtung (6) abgedeckt ist, **dadurch gekennzeichnet**, daß die Spindel (4) in der Nähe der Dichtung (6) kippbeweglich an dem Gehäuse (1b) abgestützt ist, die Dichtung (6) eine elastisch kippbewegliche Dichtzone (6a) aufweist und die Spindelmutter (9) mit seitlichem Spiel (11) in dem Gehäuse (1b) gehalten ist.

2. Hubventil nach Anspruch 1, dadurch gekennzeichnet, daß die Spindel (4) in einer sich in einer Bohrung (8) des Gehäuses (1b) abstützenden Kugelbuchse (7) gehalten und geführt ist.

3. Hubventil nach Anspruch 1, dadurch gekennzeichnet, daß die Dichtung (6) eine elastisch kippbewegliche Lippe (6a) aufweist, die an der Spindel (4) anliegt.

4. Hubventil nach Anspruch 1, dadurch gekennzeichnet, daß die Spindelmutter (9) in axialer Richtung unter die Kraft einer Feder (15) gesetzt ist.

5. Hubventil nach Anspruch 4, dadurch gekennzeichnet, daß das obere Ende der Feder (15) auf eine Rutschscheibe (16) wirkt, die auf der unteren Stirnfläche der Spindelmutter (9) angeordnet ist.

6. Hubventil nach Anspruch 1, mit einer Feststellschraube (17) zum Festsetzen der Spindelmutter (9) und des mit ihr verbundenen Handrades (10), dadurch gekennzeichnet, daß die Feststellschraube (17) durch eine Materialzone des Handrades (10) in die obere Stirnfläche des oberen Teiles (1b) des Gehäuses schraubbar ist.

7. Hubventil nach Anspruch 6, dadurch gekennzeichnet, daß auf dem oberen Teil (1b) des Gehäuses eine Abdeckkappe (18) undrehbar gehalten ist, die an ihrer oberen Stirnfläche ein Verschleißteil (19) aufweist, gegen das die Feststellschraube (17) schraubbar ist.

8. Hubventil nach Anspruch 1, dadurch gekennzeichnet, daß die Spindelmutter (9) an dem Gehäuse (1b) zur Übertragung der Ventilschließkraft mittels einer Schrägfläche (13) abgestützt ist.

9. Hubventil nach Anspruch 8, dadurch gekennzeichnet, daß die Spindelmutter (9) auf der oberen Rückseite einer unteren Schulter (9a) einen Abstützring (12) trägt, der seitliches Spiel zum Gehäuse (1b) hat und oben außen die Schrägfläche (13) aufweist, die mit einem im Gehäuse (1b) angeordneten Sprengring (14) zusammenwirkt.

## Claims

1. A lifting valve with a housing (1a, 1b) which has an unmachined valve seat (2) and with a spindle (4) which can be raised and lowered, the spindle having the valve piece (5) at its bottom end which cooperates with the valve seat, and engaging with a spindle nut (9) arranged in the top region of the housing, wherein the top region (1b) of the housing is shielded from the zone through which the medium flows by a seal (6) which is arranged in the housing and which acts on the spindle (4), characterised in that the spindle (4) bears on the housing (1b) in pivotally movable manner in the vicinity of the seal (6), the seal (6) has an elastically pivotally movable sealing zone (6a), and the spindle nut (9) is held in the housing (1b) with lateral clearance (11).

2. A lifting valve according to Claim 1, characterised in that the spindle (4) is held and guided in a ball box (7) supported in a bore (8) of the housing (1b).

3. A lifting valve according to Claim 1, characterised in that the seal (6) has an elastically pivotally movable lip (6a) which lies against the spindle (4).

4. A lifting valve according to Claim 1, characterised in that the spindle nut (9) is placed axially under the force of a spring (15).

5. A lifting valve according to Claim 4, characterised in that the upper end of the spring (15) acts upon a sliding disc (16) arranged on the bottom face of the spindle nut (9).

6. A lifting valve according to Claim 1, having a locking screw (17) for securing the spindle nut (9) and the handwheel (10) connected thereto, characterised in that the locking screw (17) is able to be screwed into the upper end face of the upper part (1b) of the housing through a material zone of the hand wheel (10).

7. A lifting valve according to Claim 6, characterised in that a cover (18) is non-rotatably held to the top part (1b) of the housing, the cover having a part (19) which is subject to wear on its upper end face, towards which part (19) the locking screw (17) is able to be screwed.

8. A lifting valve according to Claim 1, characterised in that the spindle nut (9) bears on the housing (1b) to transfer the valve's closure force by means of an inclined surface (13).

9. A lifting valve according to Claim 8, characterised in that the spindle nut (9) has a support ring (12) on the upper rear side of a lower shoulder (9a), which ring has a lateral clearance relative to the housing (1b) and the inclined surface (13) at the top to the outside, the inclined surface cooperating with a circlip (14) arranged in the housing (1b).

## Revendications

1. Soupape à mouvement linéaire avec un corps (1a, 1b) présentant un siège de soupape (2) non usiné et une tige filetée (4) susceptible d'être levée et abaissée et portant à son extrémité inférieure l'obturateur (5), coopérant avec le siège de soupape, et mise en prise avec un écrou (9), disposé dans la zone supérieure du corps, la zone supérieure de corps (1b) étant étanchée, vis-à-vis de la zone parcourue par un écoulement de fluide, au moyen d'un joint d'étanchéité (6) disposé sur le corps et agissant sur la tige filetée (4), caractérisée en ce que la tige filetée (4) est soutenue sur le corps (1b) à proximité du joint d'étanchéité (6) de façon mobile en basculement, le joint d'étanchéité (6) présentant une zone d'étanchéité (6a) élastique mobile en basculement et l'écrou (9) étant fixé dans le corps (1b) avec un jeu latéral (11).

2. Soupape à mouvement linéaire selon la revendication 1, caractérisée en ce que la tige filetée (4) est maintenue et guidée dans une douille sphérique (7) prenant appui dans un perçage (8) du corps (1b).

3. Soupape à mouvement linéaire selon la revendication 1, caractérisée en ce que le joint d'étanchéité (6) présente une lèvre (6a) élastique mobile en basculement, s'appuyant sur la broche (4).

4. Soupape à mouvement linéaire selon la revendication 1, caractérisée en ce que l'écrou (9) est soumis à l'action d'un ressort (15) agissant en direction axiale.

5. Soupape à mouvement linéaire selon la revendication 4, caractérisée en ce que l'extrémité supérieure du ressort (15) agit sur un disque de glissement (16) disposé sur la face frontale inférieure de l'écrou (9).

6. Soupape à mouvement linéaire selon la revendication 1, avec une vis de blocage du réglage (17), destinée à bloquer l'écrou (9) et le volant (10) qui lui est lié, caractérisée en ce que la vis de blocage du réglage (17) peut être vissée dans la surface frontale supérieure de la partie supérieure (1b) du corps au travers d'une zone de matière appartenant au volant (10).

7. Soupape à mouvement linéaire selon la revendication 6, caractérisée en ce que, sur la partie supérieure (1b) du corps, est fixé, bloqué en rotation, un capuchon de recouvrement (18) présentant sur sa face frontale supérieure une partie d'usure (19), contre laquelle la vis de blocage de réglage (17) peut être vissée.

8. Soupape à mouvement linéaire selon la revendication 1, caractérisée en ce que l'écrou (9) prend appui sur le corps (1b), en vue de transmettre l'effort de fermeture de la soupape, au moyen d'une surface oblique (13).

9. Soupape à mouvement linéaire selon la revendication 8, caractérisée en ce que l'écrou (9) porte sur la face arrière supérieure d'un épaulement inférieur (9a) une bague d'appui (12) ayant un jeu latéral par rapport au corps (1b) et présentant extérieurement et en partie haute la surface oblique (13) qui coopère avec un anneau élastique (14) disposé dans le corps (1b).
